# EUROPEAN PATENT APPLICATION

(11) **EP 4 807 840 A1**
(43) Date of publication of application: **16.09.2026**
(21) Application number: 24887915.7
(22) Date of filing: 04.11.2024
(51) Int. Cl.: H01M 10/0525, H01M 4/36

(54) **SECONDARY BATTERY AND ELECTRICAL DEVICE**

(30) Priority: 09.11.2023 CN 202311490363
(71) Applicant: Ningde Amperex Technology Limited, Ningde, Fujian 352100 (CN)
(72) Inventor: JIN, Wenbo, Ningde, Fujian 352100 (CN)
(74) Representative: Dehns Germany Partnerschaft mbB
(86) International application number: PCT/CN2024/129784
(87) International publication number: WO 2025/098303

(57) **Abstract**

A secondary battery and an electrical device are provided, pertaining to the field of secondary battery technology. The secondary battery includes a negative electrode plate and an electrolyte; where a negative electrode active material in the negative electrode plate has a graphitization degree G, the electrolyte includes 1,3-propane sultone and fluoroethylene carbonate, and based on a mass of the electrolyte, a mass percentage of 1,3-5propane sultone is X% and a mass percentage of fluoroethylene carbonate is Y%, where X > 0.2 × G + Y, and 1.2 ≤ Y ≤ 4.2. The secondary battery can mitigate the issue of lithium precipitation at low temperatures and improve the cycling performance of the battery.

## Description

### CROSS-REFERENCE TO RELATED APPLICATIONS

This application claims priority to Chinese Patent Application No. 2023114903633, filed on November 9, 2023, and entitled "SECONDARY BATTERY AND ELECTRICAL DEVICE," the entire contents of which are incorporated herein by reference.

### TECHNICAL FIELD

This application relates to the field of secondary battery technology, and more particularly, to a secondary battery and an electrical device.

### BACKGROUND

Lithium-ion secondary batteries are widely used in our daily lives, such as in consumer products like mobile phones, computers, tablets, wristbands, smartwatches, and electronic door locks, as well as in power applications like electric vehicles, energy storage systems, power tools, and drones, impacting various aspects of our lives. Meanwhile, the service life of lithium-ion secondary batteries has garnered attention, as consumers demand batteries with long lifespans. A long-life battery refers to a battery with good cycling performance, and the cycling performance directly impacts the user's performance experience. Good cycling performance allows electric vehicles to have a prolonged lifespan, extending their service life, enables energy storage batteries to operate long-term without replacement, and provides mobile phones with extended endurance, reducing the inconvenience of frequent battery replacements. Additionally, the cycling performance of a battery is somewhat correlated with the usage cost of the battery; at the same price, a higher number of cycles means a lower cost per cycle. Therefore, the market prefers products with better cycling performance at the same price point, which is particularly important for the actual operating conditions of electric vehicles and energy storage batteries. To meet market demands, there is a need to develop lithium-ion batteries with good cycling performance. Consequently, the cycling performance of negative electrode active materials needs improvement, and the system design also requires optimization. Existing negative electrode active materials for lithium-ion batteries typically employ methods such as coating and raw material or particle size design to improve cycling performance, but these methods involve complex processing of the negative electrode active materials.

### SUMMARY

In view of this, this application provides a secondary battery and an electrical device, which can mitigate the issue of lithium precipitation at low temperatures and improve the cycling performance of the battery.

According to a first aspect of this application, a secondary battery is provided, including a negative electrode plate and an electrolyte, where a negative electrode active material in the negative electrode plate has a graphitization degree G, the electrolyte includes 1,3-propane sultone and fluoroethylene carbonate, and based on a mass of the electrolyte, a mass percentage of 1,3-propane sultone is X% and a mass percentage of fluoroethylene carbonate is Y%, where X > 0.2 × G + Y, and 1.2 ≤ Y ≤ 4.2.

In the above technical solution, it was found through studies that the graphitization degree of the negative electrode active material affects the interlayer spacing of graphite of the active material, and the interlayer spacing influences the intercalation or deintercalation of active ions (for example, lithium ions), thereby impacting the cycling performance of the secondary battery. Therefore, the cycling performance of the secondary battery can be improved by controlling the graphitization degree range. The graphitization degree is related to the interlayer spacing of the negative electrode active material, and the interlayer spacing of the negative electrode active material affects the reaction degree between the negative electrode active material and the electrolyte, thereby influencing the intercalation/deintercalation of active ions in another dimension and consequently affecting the cycling performance and low-temperature lithium precipitation performance of the secondary battery. Thus, in this application, based on the mass of the electrolyte, the mass percentage of fluoroethylene carbonate is between 1.2% and 4.2%, which can promote film formation on the negative electrode, and the film formed on the negative electrode has low impedance and good kinetics, but its addition may generate side reactions. Therefore, 1,3-propane sultone is further added to the electrolyte, with X > 0.2 × G + Y, which can suppress side reactions to some extent and achieve relatively high film formation quality on both the positive and negative electrodes, resulting in good cycling performance and low-temperature lithium precipitation performance of the secondary battery.

In some embodiments, 1.7 ≤ X ≤ 5.1. While X > 0.2 × G + Y is satisfied, when the mass percentage of 1,3-propane sultone is between 1.7% and 5.1% based on the mass of the electrolyte, the coordination between 1,3-propane sultone and fluoroethylene carbonate can be improved, thereby further improving the film formation quality on both the positive and negative electrodes, mitigating side reaction issues in the secondary battery, and further improving the cycling performance and low-temperature lithium precipitation performance of the secondary battery. Optionally, 1.8 ≤ X ≤ 4.1.

In some embodiments, 91.8% < G ≤ 97%. A higher graphitization degree of the negative electrode active material reduces the degree of side reactions with the electrolyte, resulting in a thinner SEI film. However, a higher graphitization degree leads to a smaller interlayer spacing, causing relatively significant interlayer spacing swelling during lithium intercalation, thus making the SEI film prone to cracking and rendering lithium ion intercalation/deintercalation more difficult. Therefore, controlling the mass percentage X% of 1,3-propane sultone and the mass percentage Y% of fluoroethylene carbonate in the electrolyte to satisfy X > 0.2 × G + Y and 1.2 ≤ Y ≤ 4.2 allows for higher film formation stability of the SEI film, facilitating interfacial diffusion of lithium ions, thereby improving lithium ion intercalation/deintercalation at low temperatures and further improving the cycling performance and low-temperature lithium precipitation performance of the secondary battery. Optionally, 93.5% ≤ G ≤ 96%.

In some embodiments, 1.4 ≤ Y ≤ 3.5. Based on the mass of the electrolyte, fluoroethylene carbonate has the mass percentage between 1.4% and 3.5%, and in coordination with 1,3-propane sultone, further improves the film formation stability of the SEI film on the surface of the negative electrode active material, mitigating lithium precipitation issues at low temperatures, thereby further enhancing the cycling performance and low-temperature lithium precipitation performance of the secondary battery.

In some embodiments, the negative electrode active material satisfies: 0.05 ≤ CD/(372 × G) × Z₅₀ ≤ 0.1, where a powder compacted density of the negative electrode active material is CD g/cm³, and in a volume-based particle size distribution of the negative electrode active material, a particle size reaching 50% of a cumulative volume from a small particle size side is Z₅₀ µm. It is found through studies that the graphitization degree affects the compacted density of the negative electrode active material, and the particle size Z₅₀ also affects the compacted density of the active material. Therefore, when the negative electrode active material satisfies 0.06 ≤ CD/(372 × G) × Z₅₀ ≤ 0.1, the low-temperature lithium precipitation performance of the secondary battery can be further improved, and the cycling performance of the secondary battery can be improved. Optionally, 0.06 ≤ CD/(372 × G) × Z₅₀ ≤ 0.095.

In some embodiments, 1.7 ≤ CD ≤ 2.0. When the compacted density of the negative electrode active material is between 1.7 g/cm³ and 2.0 g/cm³, the cycling performance and low-temperature performance of the secondary battery can be further improved.

In some embodiments, 7 ≤ Z₅₀ ≤ 15. In the volume-based particle size distribution of the negative electrode active material, when the particle size reaching 50% of the cumulative volume from the small particle size side is between 7 µm and 15 µm, the overall performance of the negative electrode active material can be improved, further improving the performance of the secondary battery.

In some embodiments, the negative electrode active material satisfies: 3.5 ≤ (Z₉₀/Z₁₀) × E - T ≤ 20, where a specific surface area of the negative electrode active material is T m²/g, in a volume-based particle size distribution of the negative electrode active material, a particle size reaching 10% of the cumulative volume from a small particle size side is Z₁₀ µm and a particle size reaching 90% of the cumulative volume is Z₉₀ µm, and in a number-based particle size distribution of the negative electrode active material, a particle size reaching 10% of a cumulative number from the small particle size side is E µm. The graphitization degree G of the negative electrode active material affects the specific surface area T of the negative electrode active material, thereby influencing the reactive surface area between the electrolyte and the negative electrode active material, and the particle distribution of the negative electrode active material also affects the reactive surface area. Therefore, under the premise of specified graphitization degree G and electrolyte additives, when the negative electrode active material satisfies 3.5 ≤ (Z₉₀/Z₁₀) × E - T ≤ 20, the low-temperature lithium precipitation performance of the secondary battery can be further improved, and the cycling performance of the secondary battery can be improved. Optionally, 5 ≤ (Z₉₀/Z₁₀) × E - T ≤ 13.

In some embodiments, 3 ≤ Z₁₀ ≤ 8. In the volume-based particle size distribution of the negative electrode active material, when the particle size reaching 10% of the cumulative volume from the small particle size side is between 5 µm and 10 µm, good overall performance of the negative electrode active material can be achieved, further improving the performance of the secondary battery.

In some embodiments, 20 ≤ Z₉₀ ≤ 35. In the volume-based particle size distribution of the negative electrode active material, when the particle size reaching 90% of the cumulative volume from the small particle size side is between 20 µm and 35 µm, the cycling performance of the secondary battery can be further improved.

In some embodiments, 1 ≤ E ≤ 5. In the number-based particle size distribution of the negative electrode active material, when the particle size reaching 10% of the cumulative number from the small particle size side is between 1 µm and 5 µm, good overall performance of the negative electrode active material can be achieved, further improving the performance of the secondary battery.

In some embodiments, 1 ≤ T ≤ 5. When the specific surface area of the negative electrode active material is between 1 m²/g and 2 m²/g, the cycling and low-temperature performance of the secondary battery can be further improved. In some embodiments, a particle sphericity S of the negative electrode active material satisfies: 0.4 ≤ S ≤ 0.95. The particle morphology of the negative electrode active material affects the electrochemical performance of the secondary battery to some extent, and spherical particles help reduce the reactive surface area of the particles, improving cycling performance and low-temperature lithium precipitation performance. Under the premise of specified graphitization degree G and electrolyte additives, when the sphericity S of the negative electrode active material satisfies 0.4 ≤ S ≤ 0.95, the cycling performance and low-temperature lithium precipitation performance of the battery can be further improved. Optionally, 0.48 ≤ S ≤ 0.7.

In some embodiments, an intensity ratio Id/Ig of D peak to G peak in a Raman spectrum of the negative electrode active material satisfies: 0.2 ≤ Id/Ig ≤ 0.6, where Id represents a characteristic peak intensity of the Raman spectrum at 1300 cm⁻¹ to 1400 cm⁻¹, and Ig represents a characteristic peak intensity of the Raman spectrum at 1525 cm⁻¹ to 1625 cm⁻¹. Optionally, 0.2 ≤ Id/Ig ≤ 0.4. The graphitization degree G of the negative electrode active material affects the surface defect degree of the material. At a lower graphitization degree G, the surface defect degree of the negative electrode active material is higher, which impacts the cycling performance and low-temperature lithium precipitation performance of the battery to some extent. Therefore, under the premise of specified graphitization degree G and electrolyte additives, when the negative electrode active material satisfies 0.2 ≤ Id/Ig ≤ 0.6, the low-temperature lithium precipitation performance of the secondary battery can be further improved, and the cycling performance of the secondary battery can be improved.

In some embodiments, the negative electrode active material includes at least one of natural graphite or artificial graphite.

In some embodiments, a compacted density of the negative electrode plate satisfies: 1.3 g/cm³ ≤ PD ≤ 1.78 g/cm³. The graphitization degree affects the powder compacted density of the negative electrode active material, which in turn affects the compacted density of the electrode plate. Under the premise of specified the graphitization degree G of the negative electrode active material and electrolyte additives, when the compacted density of the negative electrode plate satisfies 1.3 g/cm³ ≤ PD ≤ 1.78 g/cm³, better wetting of the electrolyte can be achieved, facilitating lithium ion intercalation or deintercalation, thereby further improving the cycling performance and low-temperature performance of the battery.

In some embodiments, the negative electrode plate satisfies 6 ≤ OI value ≤ 18. The graphitization degree G of the negative electrode active material also affects the OI value of the electrode plate; a higher graphitization degree results in a larger OI value. Under the premise of specified graphitization degree G and electrolyte additives, when the negative electrode plate satisfies 6 ≤ OI value ≤ 18, lithium ions can intercalate or deintercalate in various directions, further improving the cycling performance and low-temperature performance of the battery. Optionally, 7 ≤ OI value ≤ 15.

According to a second aspect of this application, an electrical device is provided, including the secondary battery provided in any one of the first aspect.

### BRIEF DESCRIPTION OF DRAWINGS

To more clearly illustrate the technical solutions of some embodiments of this application, the drawings required for use in these embodiments will be briefly described below. It should be understood that the following drawings only show some embodiments of this application and should not be regarded as limiting the scope. For those skilled in the art, other related drawings can be obtained based on these drawings without creative effort.

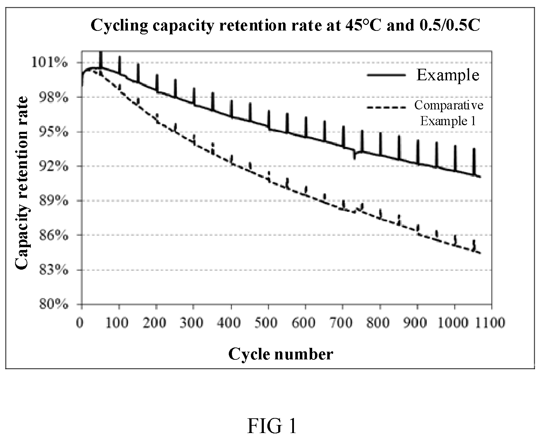

FIG. 1 is a cycling performance graph of lithium-ion batteries provided in Example 1 and Comparative Example 1 of this application.

### DETAILED DESCRIPTION

This application provides a secondary battery including a negative electrode plate and an electrolyte, where a negative electrode active material in the negative electrode plate has a graphitization degree G, the electrolyte includes 1,3-propane sultone and fluoroethylene carbonate, and based on a mass of the electrolyte, a mass percentage of 1,3-propane sultone is X% and a mass percentage of fluoroethylene carbonate is Y%, where X > 0.2 × G + Y, and 1.2 ≤ Y ≤ 4.2.

The negative electrode plate includes a negative electrode current collector and a negative electrode active material layer located on one or both surfaces of the negative electrode current collector. The "surface" here may refer to the entire region of the negative electrode current collector or a partial region of the negative electrode current collector, with no particular limitation in this application, as long as the purpose of this application can be achieved. The negative electrode active material may be obtained through the following process: disassembling the secondary battery to obtain the negative electrode plate, scraping off the negative electrode active material layer from the negative electrode plate, and calcining it in an air atmosphere at a temperature of 400°C, and the resulting powder material is the negative electrode active material.

The negative electrode active material has a graphitization degree G, and the graphitization degree G can be detected by XRD and then calculated.

Since the graphitization degree of the negative electrode active material affects the interlayer spacing of active material graphite, and the interlayer spacing influences the intercalation or deintercalation of active ions (for example, lithium ions), thereby impacting the cycling performance of the secondary battery. The cycling performance of the secondary battery can be improved by controlling the graphitization degree range. The graphitization degree is related to the interlayer spacing of the negative electrode active material, and the interlayer spacing of the negative electrode active material affects the reaction degree between the negative electrode active material and the electrolyte, thereby influencing the intercalation/deintercalation of active ions in another dimension and consequently affecting the cycling performance and low-temperature lithium precipitation performance of the secondary battery. Thus, in this application, based on the mass of the electrolyte, the mass percentage of fluoroethylene carbonate is between 1.2% and 4.2%, which can promote film formation on the negative electrode, and the film formed on the negative electrode has low impedance and good kinetics, but its addition may generate side reactions. Therefore, 1,3-propane sultone is further added to the electrolyte, with X > 0.2 × G + Y, which can suppress side reactions to some extent and achieve relatively high film formation quality on both the positive and negative electrodes, resulting in good cycling performance and low-temperature lithium precipitation performance of the secondary battery. For example, the mass percentage of fluoroethylene carbonate is 1.2%, 1.5%, 2%, 2.2%, 2.5%, 2.8%, 3%, 3.2%, 3.5%, 3.8%, 4%, 4.2%, or a value within a range formed by any two of these values. Optionally, 1.4 ≤ Y ≤ 3.5.

In some embodiments, the electrolyte includes 1,3-propane sultone and fluoroethylene carbonate, and based on the mass of the electrolyte, a mass percentage of 1,3-propane sultone is X% and a mass percentage of fluoroethylene carbonate is Y%, with X > 0.2 × G + Y, 1.2 ≤ Y ≤ 4.2, and 1.7 ≤ X ≤ 5.1. While X > 0.2 × G + Y is satisfied, when the mass percentage of fluoroethylene carbonate is between 1.2% and 4.2% and the mass percentage of 1,3-propane sultone is between 1.7% and 5.1%, the coordination between 1,3-propane sultone and fluoroethylene carbonate can be improved, thereby further improving the film formation quality on both the positive and negative electrodes, mitigating side reaction issues in the secondary battery, and further improving the cycling performance and low-temperature lithium precipitation performance of the secondary battery.

For example, based on the mass of the electrolyte, the mass percentage of 1,3-propane sultone is 1.7%, 2.0%, 2.2%, 2.5%, 2.8%, 3%, 3.2%, 3.5%, 3.8%, 4%, 4.2%, 4.5%, 4.8%, 5.1%, or a value within a range formed by any two of these values. Optionally, the mass percentage of 1,3-propane sultone is 1.8% to 4.1%.

In some embodiments, the electrolyte includes 1,3-propane sultone and fluoroethylene carbonate, and based on the mass of the electrolyte, a mass percentage of 1,3-propane sultone is X% and a mass percentage of fluoroethylene carbonate is Y%, with X > 0.2 × G + Y, 1.2 ≤ Y ≤ 4.2, and 91.8% < G ≤ 97%. A higher graphitization degree of the negative electrode active material reduces the degree of side reactions with the electrolyte, resulting in a thinner SEI film. However, a higher graphitization degree leads to a smaller interlayer spacing, causing relatively significant interlayer spacing swelling during lithium intercalation, thus making the SEI film prone to cracking and rendering lithium ion intercalation/deintercalation more difficult. Therefore, controlling X > 0.2 × G + Y, 1.2 ≤ Y ≤ 4.2, and a graphitization degree of the negative electrode active material between 91.8% and 97% allows for higher film formation stability of the SEI film, facilitating interfacial diffusion of lithium ions, thereby improving lithium ion intercalation/deintercalation at low temperatures and further improving the cycling performance and low-temperature lithium precipitation performance of the secondary battery.

For example, the graphitization degree G of the negative electrode active material is 91.8%, 92%, 92.2%, 92.5%, 92.8%, 93%, 93.2%, 93.5%, 94%, 94.5%, 95%, 95.5%, 96%, 96.5%, 97%, 97.5%, 98%, 98.5%, 99%, 99.5%, or a value within a range formed by any two of these values. Optionally, 93.5% ≤ G ≤ 96%.

In this application, the mass percentage of each component in the electrolyte is typically controlled during the preparation of the electrolyte. After the battery undergoes charge-discharge cycles, the components in the electrolyte may undergo slight changes but remain within the aforementioned ranges. The mass percentage of each component in the electrolyte of this application may also refer to the mass percentage of the electrolyte in a battery disassembled after charge-discharge cycles. The detection method may be: discharging the battery, placing it in a drying oven after discharge, cutting off the tabs and packaging bag, and then placing it in a centrifuge for centrifugal operation to extract the electrolyte in the battery. The extracted electrolyte is analyzed using a gas chromatography-mass spectrometry instrument to determine the components of the additives in the electrolyte and their mass percentages, the mass percentage of each component being calculated based on the mass of the electrolyte.

In this application, the electrolyte may also include other components. The electrolyte lithium salt also includes lithium salt and a non-aqueous solvent, where the lithium salt may include at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, Li₂SiF₆, lithium bis(oxalato)borate (LiBOB), or lithium difluoro(oxalato)borate. This application does not particularly limit the mass percentage of the lithium salt in the electrolyte, as long as the purpose of this application can be achieved. For example, based on the mass of the electrolyte, the mass percentage of the lithium salt is 10% to 15%. The electrolyte may also include a sodium salt and a non-aqueous solvent, or the electrolyte may include a lithium salt and a non-aqueous solvent; where the sodium salt may include at least one of NaPF₆, NaClO₄, NaBCl₄, NaSO₃CF₃, or Na(CH₃)C₆H₄SO₃. This application does not particularly limit the concentration of the sodium salt in the electrolyte, as long as the purpose of this application can be achieved. For example, based on the mass of the electrolyte, the mass percentage of the sodium salt is 2% to 15%.

This application does not particularly limit the above non-aqueous solvent, as long as the purpose of this application can be achieved, for example, it may include but is not limited to at least one of carbonate compounds, carboxylate compounds, ether compounds, or other organic solvents. The carbonate compounds may include but are not limited to at least one of linear carbonate compounds, cyclic carbonate compounds, or fluorinated carbonate compounds. The linear carbonate compounds may include but are not limited to at least one of dimethyl carbonate (DMC), diethyl carbonate (DEC), dipropyl carbonate (DPC), methyl propyl carbonate (MPC), ethyl propyl carbonate (EPC), or ethyl methyl carbonate (MEC). The cyclic carbonate may include but are not limited to at least one of ethylene carbonate (EC), propylene carbonate (PC), butylene carbonate (BC), or vinyl ethylene carbonate (VEC). The fluorinated carbonate compounds may include but are not limited to at least one of 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethyl ethylene carbonate. The carboxylate compounds may include but are not limited to at least one of methyl formate, methyl acetate, ethyl acetate, n-propyl acetate, tert-butyl acetate, methyl propionate, ethyl propionate, propyl propionate, γ-butyrolactone, caprolactone, valerolactone, or hexanolide. The ether compounds may include but are not limited to at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The other organic solvents may include but are not limited to at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate.

In some embodiments, the negative electrode active material includes at least one of natural graphite or artificial graphite.

In some embodiments, the negative electrode active material satisfies: 0.05 ≤ CD/(372 × G) × Z₅₀ ≤ 0.1, where a powder compacted density of the negative electrode active material is CD g/cm³, and in a volume-based particle size distribution of the negative electrode active material, a particle size reaching 50% of a cumulative volume from a small particle size side is Z₅₀ µm. It is found through studies that the graphitization degree affects the compacted density of the negative electrode active material, and the particle size Z₅₀ also affects the compacted density of the active material. Therefore, when the negative electrode active material satisfies 0.05 ≤ CD/(372 × G) × Z₅₀ ≤ 0.1, the low-temperature lithium precipitation performance of the secondary battery can be further improved, and the cycling performance of the secondary battery can be improved.

In the formula CD/(372 × G) × Z₅₀, the unit of compacted density is g/cm³, and in the volume-based particle size distribution of the negative electrode active material, the particle size reaching 50% of the cumulative volume from the small particle size side is Dᵥ50, with a unit of µm, that is, Z₅₀ µm. In the calculation of this formula, only the numerical values with these units are considered, and the units themselves are disregarded.

For example, the value of CD/(372 × G) × Z₅₀ is 0.05, 0.055, 0.06, 0.07, 0.08, 0.09, 0.095, 0.1, or a value within a range formed by any two of these values. Optionally, 0.06 ≤ CD/(372 × G) × Z₅₀ ≤ 0.095.

In some embodiments, based on the mass of the electrolyte, the electrolyte includes 1,3-propane sultone with a mass percentage of X% and fluoroethylene carbonate with a mass percentage of Y%, with X > 0.2 × G + Y, 1.2 ≤ Y ≤ 4.2, and the powder compacted density of the negative electrode active material is in the range of 1.7 g/cm³ to 2.0 g/cm³, which can further improve the cycling performance and low-temperature lithium precipitation performance of the secondary battery.

For example, the powder compacted density of the negative electrode active material is 1.7 g/cm³, 1.72 g/cm³, 1.74 g/cm³, 1.76 g/cm³, 1.78 g/cm³, 1.8 g/cm³, 1.82 g/cm³, 1.84 g/cm³, 1.86 g/cm³, 1.88 g/cm³, 1.9 g/cm³, 1.92 g/cm³, 1.94 g/cm³, 1.96 g/cm³, 1.98 g/cm³, 2.0 g/cm³, or a value within a range formed by any two of these values.

In some embodiments, in the volume-based particle size distribution of the negative electrode active material, the particle size reaching 50% of the cumulative volume from the small particle size side is in the range of 7 µm to 15 µm (Z₅₀ µm is 35 µm to 45 µm), allowing for good overall performance of the negative electrode active material, thus further improving the performance of the secondary battery.

For example, in the volume-based particle size distribution of the negative electrode active material, the particle size reaching 50% of the cumulative volume from the small particle size side is 7 µm, 8 µm, 9 µm, 10 µm, 11 µm, 12 µm, 13 µm, 14 µm, 15 µm, or a value within a range formed by any two of these values.

In some embodiments, the negative electrode active material satisfies: 3.5 ≤ (Z₉₀/Z₁₀) × E - T ≤ 20, where a specific surface area of the negative electrode active material is T m²/g, in a volume-based particle size distribution of the negative electrode active material, a particle size reaching 10% of the cumulative volume from a small particle size side is Z₁₀ µm and a particle size reaching 90% of the cumulative volume is Z₉₀ µm, and in a number-based particle size distribution of the negative electrode active material, a particle size reaching 10% of a cumulative number from the small particle size side is E µm. The graphitization degree G of the negative electrode active material affects the specific surface area T of the negative electrode active material, thereby influencing the reactive surface area between the electrolyte and the negative electrode active material, and the particle distribution of the negative electrode active material also affects the reactive surface area. Therefore, under the premise of specified graphitization degree G and electrolyte additives, when the negative electrode active material satisfies 3.5 ≤ (Z₉₀/Z₁₀) × E - T ≤ 15, the low-temperature lithium precipitation performance of the secondary battery can be further improved, and the cycling performance of the secondary battery can be improved.

In the formula (Z₉₀/Z₁₀) × E - T, in the volume-based particle size distribution of the negative electrode active material, the particle size reaching 10% of the cumulative volume from the small particle size side is Dᵥ10, with a unit of µm, that is, Z₁₀ µm; in the volume-based particle size distribution of the negative electrode active material, the particle size reaching 90% of the cumulative volume from the small particle size side is Dᵥ90, with a unit of µm, that is, Z₉₀ µm; in the number-based particle size distribution of the negative electrode active material, the particle size reaching 10% of the cumulative number from the small particle size side is Dn10, with a unit of µm, that is, E µm; and the specific surface area BET of the negative electrode active material is T m²/g. In the calculation of this formula, only the numerical values with these units are considered, and the units themselves are disregarded.

For example, the value of (Z₉₀/Z₁₀) × E - T is 3.5, 4, 5, 6, 7, 8, 9, 10, 11, 12, 13, 14, 15, 17, 20, or a value within a range formed by any two of these values. Optionally, 5 ≤ (Z₉₀/Z₁₀) × E - T ≤ 13.

In some embodiments, in the volume-based particle size distribution of the negative electrode active material, the particle size reaching 90% of the cumulative volume from the small particle size side is in the range of 20 µm to 35 µm (Z₉₀ µm is 20 µm to 35 µm), which can further improve the cycling performance and low-temperature lithium precipitation performance of the secondary battery.

For example, in the volume-based particle size distribution of the negative electrode active material, the particle size reaching 90% of the cumulative volume from the small particle size side is 20 µm, 23 µm, 25 µm, 27 µm, 29 µm, 31 µm, 32 µm, 33 µm, 34 µm, 35 µm, or a value within a range formed by any two of these values.

In some embodiments, in the volume-based particle size distribution of the negative electrode active material, the particle size reaching 10% of the cumulative volume from the small particle size side is in the range of 3 µm to 8 µm (Z₁₀ µm is 3 µm to 8 µm), which can further improve the cycling performance and low-temperature lithium precipitation performance of the secondary battery.

For example, in the volume-based particle size distribution of the negative electrode active material, the particle size reaching 10% of the cumulative volume from the small particle size side is 3 µm, 4 µm, 5 µm, 5.5 µm, 6 µm, 7 µm, 7.5 µm, 8 µm, or a value within a range formed by any two of these values.

In some embodiments, in the number-based particle size distribution of the negative electrode active material, the particle size reaching 10% of the cumulative number from the small particle size side is in the range of 1 µm to 5 µm (E µm is 1 µm to 5 µm), which can further improve the cycling performance and low-temperature lithium precipitation performance of the secondary battery.

For example, in the number-based particle size distribution of the negative electrode active material, the particle size reaching 10% of the cumulative number from the small particle size side is 1 µm, 1.5 µm, 2 µm, 2.5 µm, 3 µm, 3.5 µm, 4 µm, 4.5 µm, 5 µm, or a value within a range formed by any two of these values.

In some embodiments, the value of E is less than the value of Z₁₀, which can further improve the low-temperature lithium precipitation performance of the secondary battery and improve the cycling performance of the secondary battery.

In some embodiments, the specific surface area of the negative electrode active material is in the range of 1.0 m²/g to 5.0 m²/g, achieving good overall performance of the negative electrode active material, thus further improving the performance of the secondary battery.

For example, the specific surface area of the negative electrode active material is 1.0 m²/g, 1.4 m²/g, 1.6 m²/g, 2.0 m²/g, 2.4 m²/g, 3.2 m²/g, 3.8 m²/g, 4.1 m²/g, 5.0 m²/g, or a value within a range formed by any two of these values.

In some embodiments, a particle sphericity S of the negative electrode active material satisfies: 0.4 ≤ S ≤ 0.95. The particle morphology of the negative electrode active material affects the electrochemical performance of the secondary battery to some extent, and spherical particles help reduce the reactive surface area of the particles, improving cycling performance and low-temperature lithium precipitation performance. Under the premise of specified graphitization degree G and electrolyte additives, when the sphericity S of the negative electrode active material satisfies 0.4 ≤ S ≤ 0.95, the cycling performance and low-temperature lithium precipitation performance of the battery can be further improved.

For example, the particle sphericity S of the negative electrode active material is 0.4, 0.5, 0.55, 0.6, 0.65, 0.7, 0.75, 0.8, 0.85, 0.9, 0.95, or a value within a range formed by any two of these values. Optionally, 0.48 ≤ S ≤ 0.7.

In some embodiments, an intensity ratio Id/Ig of D peak to G peak in a Raman spectrum of the negative electrode active material satisfies: 0.2 ≤ Id/Ig ≤ 0.6, where Id represents a characteristic peak intensity of the Raman spectrum at 1300 cm⁻¹ to 1400 cm⁻¹, and Ig represents a characteristic peak intensity of the Raman spectrum at 1525 cm⁻¹ to 1625 cm⁻¹. The graphitization degree G of the negative electrode active material affects the surface defect degree of the material. At a lower graphitization degree G, the surface defect degree of the negative electrode active material is higher, which impacts the cycling performance and low-temperature lithium precipitation performance of the battery to some extent. Therefore, under the premise of specified graphitization degree G and electrolyte additives, when the negative electrode active material satisfies 0.2 ≤ Id/Ig ≤ 0.6, the low-temperature lithium precipitation performance of the secondary battery can be further improved, and the cycling performance of the secondary battery can be improved.

For example, the intensity ratio Id/Ig of D peak to G peak in a Raman spectrum of the negative electrode active material is 0.2, 0.25, 0.3, 0.35, 0.4, 0.45, 0.5, 0.55, 0.6, or a value within a range formed by any two of these values. Optionally, 0.2 ≤ Id/Ig ≤ 0.4.

In this application, the negative electrode active material includes graphite, and the preparation method of the graphite includes: (1) Petroleum coke (with a mass percentage of volatile matter of the petroleum coke being less than 13% and a mass percentage of sulfur being less than 2%) is selected as the raw material for artificial graphite, the petroleum coke is crushed to Dᵥ50 of 7 µm to 12 µm, and then pre-carbonization treatment is performed at a temperature of 800°C to 1200°C for 8 h or more than 8 h, with the mass percentage of volatile matter after treatment being less than 5%. (2) After pre-carbonization, pitch (pitch addition amount is 1% to 5% of the mass of the petroleum coke) is mixed for granulation, with a granulation time of 1 h to 3 h and a granulation temperature of 150°C to 450°C, and granulation size and powder compaction are controlled by adjusting the granulation time and temperature. (3) After granulation, uniform mixing is performed and graphitization treatment is conducted, where the graphitization degree is controlled by adjusting the graphitization temperature and time and determined with reference to the tapped density of the powder before graphitization. The graphitization temperature is 2000°C to 3000°C, and the holding time is 12 h to 72 h. In a case of a lower graphitization degree, the graphitization temperature is lower and holding time is reduced; in a case of a higher graphitization degree, the graphitization temperature is higher and holding time is increased. The tapped density of the material after granulation also affects the graphitization effect; a relatively high tapped density requires an appropriate increase in temperature and holding time, while a relatively low tapped density allows for a reduction in temperature and holding time. For the same graphitization degree requirement, different tapped densities allow adjustments to the graphitization temperature and holding time. (4) After graphitization, the particles are shaped and classified to obtain graphite, with a shaping time of 2 h to 8 h and a classification yield of 80% to 100%.

In some embodiments, a compacted density of the negative electrode plate satisfies: 1.3 g/cm³ ≤ PD ≤ 1.78 g/cm³. The graphitization degree affects the powder compacted density of the negative electrode active material, which in turn affects the compacted density of the electrode plate. Under the premise of specified the graphitization degree G of the negative electrode active material and electrolyte additives, when the compacted density of the negative electrode plate satisfies 1.3 g/cm³ ≤ PD ≤ 1.78 g/cm³, the wetting of the electrolyte can be improved, facilitating lithium ion intercalation or deintercalation, thereby further improving the cycling performance and low-temperature performance of the battery.

For example, the compacted density of the negative electrode plate is 1.30 g/cm³, 1.35 g/cm³, 1.40 g/cm³, 1.45 g/cm³, 1.50 g/cm³, 1.55 g/cm³, 1.60 g/cm³, 1.65 g/cm³, 1.70 g/cm³, 1.75 g/cm³, 1.78 g/cm³, or a value within a range formed by any two of these values.

In some embodiments, the negative electrode plate satisfies 6 ≤ OI value ≤ 18; a portion of the negative electrode plate (including the negative electrode current collector and the negative electrode active material layer) is cut out, and the XRD data of the negative electrode plate is tested with reference to JB/T 4220-2011 to obtain the peak area of the 004 peak and the peak area of the 110 peak. The OI value of the negative electrode plate = peak area of the 004 peak/peak area of the 110 peak. The peak area of the 004 peak is the characteristic peak area of the XRD diffraction pattern line at 53° to 57°, and the peak area of the 110 peak is the characteristic peak area of the XRD diffraction pattern line at 75° to 79°.

The graphitization degree G of the negative electrode active material also affects the OI value of the electrode plate; a higher graphitization degree results in a larger OI value. Under the premise of specified graphitization degree G and electrolyte additives, when the negative electrode plate satisfies 6 ≤ OI value ≤ 18, lithium ions can intercalate or deintercalate in various directions, further improving the cycling performance and low-temperature performance of the battery.

For example, the OI value of the negative electrode plate is 6, 7, 8, 9, 10, 11, 12, 13, 14, 15, 16, 17, 18, or a value within a range formed by any two of these values. Optionally, 7 ≤ OI value ≤ 15.

For example, the preparation method of the negative electrode plate includes: mixing the negative electrode active material (artificial graphite), an additive (for example, conductive agent), a binder (for example, styrene-butadiene rubber), and a thickener (for example, sodium carboxymethyl cellulose) in a certain ratio, where the mass percentage of the additive is 1% to 3%, the mass percentage of the negative electrode active material is 90% to 97%, the mass percentage of the binder styrene-butadiene rubber is 1.2% to 2.2%, and the mass percentage of the thickener sodium carboxymethyl cellulose is 0.5% to 1.5%, with the mass percentages of the four components summing to 100%. The mixture is thoroughly stirred and mixed in an appropriate amount of water solvent to form a uniform negative electrode slurry, and the slurry is applied to the negative electrode current collector, dried, and cold-pressed to obtain the negative electrode plate.

For example, the negative electrode active material layer on the negative electrode plate is scraped off and calcined in an air atmosphere at a temperature of 400°C, and the resulting powder material is the negative electrode active material.

This application does not particularly limit the negative electrode current collector, as long as the purpose of this application can be achieved. For example, the negative electrode current collector may include aluminum foil, copper foil, copper alloy foil, nickel foil, stainless steel foil, titanium foil, foamed nickel, foamed copper, or a polymer substrate coated with a conductive metal; where the conductive metal includes but is not limited to copper, nickel, or titanium, and the material of the polymer substrate includes but is not limited to at least one of polyethylene, polypropylene, ethylene-propylene copolymer, polyethylene terephthalate, polyethylene naphthalate, or poly(p-phenylene terephthalamide).

In this application, there is no particular limitation on the thickness of the negative electrode current collector and the negative electrode active material layer, as long as the purpose of this application can be achieved. For example, the thickness of the negative electrode current collector is 4 µm to 12 µm, and the thickness of the negative electrode active material layer on one surface of the negative electrode current collector is 30 µm to 130 µm.

In some embodiments, this application does not particularly limit the aforementioned binder, as long as the purpose of this application can be achieved. For example, the binder may include but is not limited to at least one of polyallyl alcohol, sodium polyacrylate, potassium polyacrylate, lithium polyacrylate, polyimide, polyamide-imide, hydroxypropyl cellulose, diacetyl cellulose, polyvinyl chloride, carboxylated polyvinyl chloride, polyvinylpyrrolidone, polyethylene, polypropylene, epoxy resin, nylon, styrene-butadiene rubber (SBR), polyvinyl alcohol (PVA), polyvinylidene fluoride (PVDF), polytetrafluoroethylene (PTFE), polyvinyl butyral, water-based acrylic resin, carboxymethyl cellulose (CMC), or sodium carboxymethyl cellulose (CMC-Na).

In some embodiments, the negative electrode plate can be prepared according to conventional methods in the art. For example, the graphite, conductive agent, binder, and thickener described above are dispersed in a solvent, and the solvent may be N-methylpyrrolidone (NMP) or deionized water, to form a uniform negative electrode slurry. Then the negative electrode slurry is applied to the negative electrode current collector, and subjected to processes such as drying and cold pressing to obtain the negative electrode plate.

The conductive agent may include but is not limited to carbon materials, metals, or conductive polymers; the carbon materials may include at least one of conductive carbon black (Super P), carbon nanotubes (CNTs), carbon nanofibers, carbon dots, or graphene; the metals may include metal powders or metal fibers such as copper, iron, or aluminum; and the conductive polymers may include at least one of polythiophene, polypyrrole, polyaniline, poly(p-phenylene), or poly(p-phenylene vinylene).

The above negative electrode plate, positive electrode plate, electrolyte, and separator are combined to form a secondary battery. This secondary battery exhibits good cycling performance and low-temperature lithium precipitation performance.

In some embodiments, the secondary battery may be a lithium-ion secondary battery or a sodium-ion secondary battery.

In some embodiments, the positive electrode plate in this application includes a positive electrode current collector and a positive electrode active material layer disposed on at least one surface of the positive electrode current collector, where the positive electrode active material layer includes a positive electrode active material; the positive electrode current collector may be aluminum foil, foamed aluminum, aluminum composite current collector (with a polymer support layer in the middle and aluminum metal layers on both surfaces of the support layer), nickel foil, foamed nickel, or the like; and the positive electrode active material may be lithium nickel cobalt manganese oxide, lithium nickel cobalt aluminum oxide, lithium cobalt oxide, lithium iron phosphate, lithium manganese oxide, Prussian white, Prussian blue, or the like.

For example, the separator may be made of various materials, such as PP (polypropylene), PE (polyethylene), or the like.

This application also provides an electrical device including the aforementioned secondary battery. The electrical device provided by this application includes the aforementioned secondary battery with relatively high energy density, low-temperature lithium precipitation performance, and cycling performance, such that the electrical device has a relatively long service life.

In some embodiments, the electrical device may include but is not limited to mobile phones, laptops, earphones, video recorders, calculators, vehicles, ships, spacecraft, power tools, electric toys, and the like. The embodiments of this application do not impose specific limitations on the electrical device.

To make the purposes, technical solutions, and advantages of some embodiments of this application clearer, the technical solutions in these embodiments of this application will be described clearly and completely below. For examples where specific conditions are not specified, they are carried out under conventional conditions or conditions recommended by the manufacturer. Reagents or instruments used without specifying the manufacturer are conventional products commercially available.

### Example 1-1

### (1) Preparation of artificial graphite

Petroleum coke (with a mass percentage of volatile matter of the petroleum coke being 10.0% and a mass percentage of sulfur being 1.2%) was crushed to Dᵥ50 of 9.0 µm, followed by pre-carbonization treatment at a temperature of 1000°C for 10 h. After treatment, pitch (pitch addition amount was 3% of the mass of the petroleum coke) was mixed with it and granulation was performed at a temperature of 300°C for 2 h. After granulation, graphitization treatment was performed at a temperature of 2900°C for 28 h. Then, shaping was performed for 4 h with a classification yield of 90% to obtain a negative electrode active material artificial graphite.

### (2) Preparation of negative electrode plate

Artificial graphite as the negative electrode active material, conductive carbon black (Super P) as an additive, styrene-butadiene rubber as a binder, and sodium carboxymethyl cellulose as a thickener were mixed in a certain ratio, where the mass percentage of the artificial graphite was 95%, the mass percentage of the additive was 1.5%, the mass percentage of the binder styrene-butadiene rubber was 2.0%, and the mass percentage of the thickener sodium carboxymethyl cellulose was 1.5%. The mixture was thoroughly stirred and mixed in an appropriate amount of deionized water solvent to obtain a negative electrode slurry with a solid content of 40wt%, which was stirred well. The negative electrode slurry was uniformly applied to both surfaces of a 6-µm-thick copper foil negative electrode current collector, and the copper foil was dried at 85°C for 4 h to obtain a negative electrode plate with a thickness of 50 µm for the negative electrode active material layer on each surface of the current collector. After cold pressing, cutting, and slitting, drying under vacuum at 120°C for 12 h was performed to obtain a negative electrode plate with specifications of 76.6 mm × 875 mm.

### (3) Preparation of positive electrode plate

Lithium iron phosphate, acetylene black as a conductive agent, and polyvinylidene fluoride as a binder were mixed in a certain ratio, where the mass percentage of lithium iron phosphate was 96.3%, the mass percentage of the conductive agent was 2.2%, and the mass percentage of polyvinylidene fluoride was 1.5%. N-methylpyrrolidone (NMP) was added as a solvent and stirred well to obtain a positive electrode slurry with a solid content of 72wt%. The positive electrode slurry was uniformly applied to both surfaces of a 13-µm-thick aluminum foil positive electrode current collector and dried at 85°C to obtain a positive electrode plate with a thickness of 80 µm for the negative electrode active material layer on each surface of the current collector. After cold pressing, cutting, and slitting, drying under vacuum at 85°C for 4 h was performed to obtain a positive electrode plate with specifications of 74 mm × 867 mm.

### (4) Preparation of electrolyte

In a dry argon atmosphere glovebox, ethylene carbonate (EC), propylene carbonate (PC), ethyl methyl carbonate (EMC), and diethyl carbonate (DEC) were mixed in a mass ratio of EC:PC:EMC:DEC = 1:3:3:3, followed by the addition of 1,3-propane sultone and fluoroethylene carbonate, which were dissolved and thoroughly stirred, and then lithium salt LiPF₆ was added and mixed well to obtain an electrolyte. The mass percentage of LiPF₆ was 11.0%, the mass percentage of 1,3-propane sultone was 2.1%, and the mass percentage of fluoroethylene carbonate was 1.9%, the mass percentage of each component being calculated based on the mass of the electrolyte.

### (5) Preparation of separator

A polyethylene film with a thickness of 8 µm (provided by Celgard) was used as the separator.

### (6) Preparation of lithium-ion battery

The above positive electrode plate, separator, and negative electrode plate were stacked in order, with the separator positioned between the positive electrode plate and negative electrode plate to provide isolation, and then wound to obtain an electrode assembly. After tabs were welded, the electrode assembly was placed in an aluminum-plastic film packaging bag, dried in a vacuum oven at 80°C for 12 h to remove moisture, injected with the prepared electrolyte, and subjected to processes such as vacuum sealing, standing, formation, degassing, and shaping to obtain a lithium-ion battery.

Example 1-2 to Example 1-15 and Comparative Example 1-1 and Comparative Example 1-2 differed from Example 1-1 in the graphitization conditions, the mass percentage of 1,3-propane sultone, and the mass percentage of fluoroethylene carbonate, with specific details provided in Table 1.

The performance of the lithium-ion batteries provided in Example 1-1 to Example 1-15 and Comparative Example 1-1 and Comparative Example 1-2 was tested, respectively, with results shown in Table 1, and the specific methods were as follows:

### (1) The following steps were performed at a 1000-cycle capacity retention rate (%)

Temperature was set to 45°C.
1. 0.5C DC to 2.5 V (which was not the first discharge).
2. Rest for 10 minutes.
3. 0.5C CC to 3.6 V, CV to 0.05C.
4. Rest for 10 minutes.
5. 0.5C DC to 2.5 V (which was the first discharge).
6. Steps 2 to 5 were repeated for 1000 cycles.
7. The capacity discharged at the 1000th cycle/the capacity discharged at the first cycle × 100% = the 1000-cycle capacity retention rate.

### (2) Low-temperature lithium precipitation performance

The lithium-ion battery was tested at -5°C, left standing for 5 min, charged at a constant current of 1.6C to 3.60 V, then charged at a constant voltage of 3.60 V to 0.05C, left standing for 5 min, then discharged at a constant current of 1.0C to 2.5 V, and left standing for 5 min. After the above charge-discharge process was repeated 10 times, the battery was fully charged and disassembled in a dry room, and the state of the negative electrode was photographed. Lithium precipitation degree determination; determination was based on the state of the negative electrode after full charge disassembly: when the negative electrode appeared entirely golden yellow with a gray area of less than 5%, it was deemed free of lithium precipitation; and when the gray area of the negative electrode exceeded 5%, it was deemed to have lithium precipitation.

### (3) Parameters of negative electrode plate

The battery was discharged and placed in a drying oven after discharge, the tabs and packaging bag were cut off, and the negative electrode plate was taken.

### (3.1) OI Value

According to the People's Republic of China Machinery Industry Standard JB/T 4220-2011 "Method for Determination of Lattice Parameters of Artificial Graphite," the (004) plane diffraction pattern and the (110) plane diffraction pattern in the X-ray diffraction spectrum of the negative electrode active material layer were tested. The test conditions were as follows: CuKα radiation X-ray was used, with CuKα radiation filtered by a filter or monochromator. The operating voltage of the X-ray tube was 30 kV to 35 kV, and the operating current was 15 mA to 20 mA. The scanning speed of the counter was 1/4°/min. When the (004) plane diffraction pattern was recorded, the diffraction angle 2θ scanning range was 53° to 57°. When the (110) plane diffraction pattern was recorded, the diffraction angle 2θ scanning range was 75° to 79°. The peak area obtained from the (004) plane diffraction pattern was denoted as C004. The peak area obtained from the (110) plane diffraction pattern was denoted as C110. The ratio of C004/C110 of the negative electrode active material was calculated as the OI value of the negative electrode plate.

### (3.2) Compacted density

Compacted density = mass/volume × 100%. The negative electrode plate was taken, and a small disc with a radius of 1 cm was punched out using a punching machine. The punched small disc was double-sided. The double-sided thickness L cm was measured and the small disc mass m g was weighed. Then the small disc was soaked and washed with soapy water to remove the active substance layer, leaving only the clean copper foil disc. The copper foil thickness L1 was measured and the copper foil mass m1 g was weighed. The compacted density was calculated according to the formula PD = (m - m1)/((3.14 × 12) × (L - L1)). The operation was repeated 5 times and the average value was taken, whereby the compacted density PD of the negative electrode plate was obtained.

### (4) Parameters of negative electrode active material

The negative electrode active material layer was scraped off from the disassembled negative electrode plate and calcined in an air atmosphere at a temperature of 400°C for 4 h, and the resulting powder material was used as the negative electrode active material.

### (4.1) Graphitization degree G testing

High-purity silicon powder was used as the standard sample, the negative electrode active material sample was mixed with the silicon standard sample in a weight ratio of 5:1, the 002 peak of graphite and the 111 peak of silicon were tested by XRD, the 002 peak of graphite obtained from the test was calibrated, and the graphitization degree of the negative electrode active material was indirectly calculated through the calibrated 002 crystal plane spacing d₀₀₂, with the calculation formula G = (0.344 - d₀₀₂)/(0.344 - 0.3354), where 0.3440 represented the interlayer spacing of completely non-graphitized carbon, and 0.3354 represented the interlayer spacing of ideal graphite, with units in nm.

### (4.2) Powder compacted density CD g/cm³ testing

The testing standard for powder compacted density referred to GB/T 24533-2009 "Lithium-Ion Battery Graphite Negative Electrode Materials." The specific testing method was: 1.0000 ± 0.0500 g of the negative electrode active material sample was weighed and placed in a testing mold (CARVER #3619 (13 mm)), and then the sample was placed in the testing equipment, which was a Sansi Zongheng UTM7305 with a testing tonnage of 5.0 tons, a pressure rise rate of 10 mm/min, a pressure holding time of 30s, a pressure release rate of 30 mm/min, and a pressure release holding time of 10s. The calculation formula for compacted density was: compacted density = material mass/(material force area × sample thickness).

### (4.3) Particle size distribution Dᵥ10 (Z₁₀ µm), Dᵥ50 (Z₅₀ µm), Dᵥ90 (Z₉₀ µm), Dn10 (E µm) testing

The particle size testing method referred to GB/T 19077-2016. The specific process was: 0.8 g of the negative electrode active material sample was weighed, mixed with 20 mL of deionized water and a trace amount of dispersant, and sonicated for 5 min in an ultrasonic device, and then the solution was poured into the Hydro 2000SM sampling system for testing. The testing equipment was the Mastersizer 3000 manufactured by Malvern. During the test, the particle size was measured by measuring the intensity of scattered light as the laser beam passed through the dispersed particle sample. The data was then used to analyze and calculate the particle size distribution of the scattering spectrum. The particle refractive index used in the test was 1.8, and each sample was tested three times, with the final particle size taken as the average of the three tests.

### (4.4) Specific surface area BET (T m²/g) testing

The testing method for specific surface area referred to GB/T 19587-2017. The specific process was: 0.5 g to 2 g of the negative electrode active material sample was weighed (the sample weight shall at least cover one-third of the spherical volume) and placed in a 1/2-inch long tube with a bulb (the tube diameter of the spherical part was 12 mm), and pretreated at 200°C for 2 h, then placed in the testing equipment TriStar 3030 (Micromeritics, USA) for testing, where N₂ (purity: 99.999%) was used as the adsorption gas, with testing conditions at 77 K, and the specific surface area was calculated using the BET method.

### (4.5) Sphericity S

The negative electrode active material particles were diluted thoroughly with alcohol, then applied to a copper foil or silicon wafer, dried, and observed using a scanning electron microscope (SEM), optical or SEM images were taken, and the sphericity of the particles was analyzed based on the images. The sphericity was defined as the ratio of the circle circumference of an equivalent projection area of a particle to the actual circumference of the projection of the particle. The SEM magnification was 1000 times, and the number of particles in the image range was not less than 100. The average sphericity of these particles was calculated as the particle sphericity S of the active material.

**Table 1**

| Number | Graphitization condition | | Tapped density after granulation (g/cm³) | Graphitization degree G | 0.2 × G + Y | Electrolyte | | Battery performance | |
|---|---|---|---|---|---|---|---|---|---|
| | Temperature (°C) | Time (h) | | | | Fluoroethylene Carbonate Y% | 1,3-propane Sultone X% | 1000-cycle capacity retention rate (%) | Whether lithium precipitation occurs at -5°C and 1.6C |
| Example 1-1 | 2900 | 28 | 0.66 | 93.80% | 2.09 | 1.9 | 2.1 | 91.6 | No |
| Example 1-2 | 2900 | 60 | 0.66 | 95.50% | 1.69 | 1.5 | 1.8 | 91.4 | No |
| Example 1-3 | 2900 | 72 | 0.66 | 96.30% | 1.89 | 1.7 | 3.2 | 91.5 | No |
| Example 1-4 | 3000 | 28 | 0.66 | 94.50% | 2.39 | 2.2 | 2.8 | 91.8 | No |
| Example 1-5 | 2900 | 28 | 0.66 | 93.80% | 1.59 | 1.4 | 1.7 | 91.3 | No |
| Example 1-6 | 2900 | 28 | 0.66 | 93.80% | 2.39 | 2.2 | 3.5 | 91.6 | No |
| Example 1-7 | 2900 | 28 | 0.66 | 93.80% | 2.39 | 2.2 | 4.1 | 91.4 | No |
| Example 1-8 | 2900 | 28 | 0.66 | 93.80% | 2.39 | 2.2 | 4.8 | 91.3 | No |
| Example 1-9 | 2900 | 28 | 0.66 | 93.80% | 1.39 | 1.2 | 2.1 | 91.4 | No |
| Example 1-10 | 2900 | 28 | 0.66 | 93.80% | 3.69 | 3.5 | 4.1 | 90.9 | No |
| Example 1-11 | 2900 | 28 | 0.66 | 93.80% | 4.39 | 4.2 | 5.1 | 90.6 | No |
| Example 1-12 | 2600 | 28 | 0.66 | 92.80% | 2.59 | 2.4 | 2.8 | 91.3 | No |
| Example 1-13 | 2500 | 25 | 0.66 | 92.00% | 2.58 | 2.4 | 2.8 | 91.2 | No |
| Example 1-14 | 2970 | 30.8 | 0.76 | 93.00% | 2.59 | 2.4 | 2.8 | 91.4 | No |
| Example 1-15 | 2430 | 25.2 | 0.56 | 93.00% | 2.59 | 2.4 | 2.8 | 91.3 | No |
| Comparative Example 1-1 | 3000 | 28 | 0.66 | 94.50% | 1.89 | 1.7 | 1.25 | 84.9 | Yes |
| Comparative Example 1-2 | 2900 | 60 | 0.66 | 95.50% | 2.29 | 2.1 | 1.9 | 85.8 | Yes |
| Comparative Example 1-3 | 2900 | 60 | 0.66 | 95.50% | 0.99 | 0.8 | 1.8 | 87.6 | Yes |
| Comparative Example 1-4 | 2900 | 60 | 0.66 | 95.50% | 4.69 | 4.5 | 5.1 | 88.9 | No |

By comparing Example 1-1 to Example 1-15 with Comparative Example 1-1 and Comparative Example 1-2, it can be seen that in the lithium-ion battery of this application, when the mass percentage X% of 1,3-propane sultone and the mass percentage Y% of fluoroethylene carbonate in the electrolyte satisfy X > 0.2 × G + Y and 1.2 ≤ Y ≤ 4.2, the issue of lithium precipitation at low temperatures can be mitigated, and the cycling performance of the battery can be improved.

By comparing Example 1-1 to Example 1-15, it can be seen that when the mass percentage of fluoroethylene carbonate is between 1.4% and 3.5% and the performance requirements for low-temperature lithium precipitation are satisfied, the cycling performance of the battery can be further improved. Further, when the electrolyte includes 1,3-propane sultone with a mass percentage of X% and fluoroethylene carbonate with a mass percentage of Y%, with X > 0.2 × G + Y, and the mass percentage of fluoroethylene carbonate is between 1.4% and 2.4%, the cycling performance of the battery can be further improved.

By comparing Example 1-6 to Example 1-8, it can be seen that when the graphitization degree and the mass percentage of fluoroethylene carbonate are the same, amass percentage of 1,3-propane sultone is relatively high (to).

Example 2-1 to Example 2-5 differed from Example 1-1 in the mass percentage of volatile matter in the petroleum coke and the Dᵥ50 of the crushed petroleum coke, with specific details provided in Table 2.

The performance is tested according to the aforementioned methods, with results shown in Table 2.

**Table 2**

| Number | Petroleum coke | | Negative electrode active material | | | CD/(372 × G) × Z₅₀ | Battery Performance | |
|---|---|---|---|---|---|---|---|---|
| | Mass percentage of volatile matter (%) | Dᵥ50 after crushing (µm) | Graphitization degree G | Z₅₀ (µm) | CD (g/cm³) | | 1000-cycle capacity retention rate (%) | Whether lithium precipitation occurs at -5°C and 1.6C |
| Example 1-1 | 10 | 9 | 93.8% | 11.3 | 1.76 | 0.057 | 91.5 | No |
| Example 2-1 | 9 | 9.5 | 92.50% | 14.5 | 1.82 | 0.077 | 92 | No |
| Example 2-2 | 11 | 8 | 92.00% | 12.5 | 1.73 | 0.063 | 92.1 | No |
| Example 2-3 | 11 | 10.5 | 93.50% | 15 | 1.85 | 0.08 | 92.1 | No |
| Example 2-4 | 12 | 10.5 | 93.80% | 15.2 | 1.88 | 0.082 | 92.2 | No |
| Example 2-5 | 13 | 12 | 92.50% | 17 | 1.95 | 0.096 | 92 | No |

By comparing Example 1-1 with Example 2-1 to Example 2-5, it can be seen that when the negative electrode active material of the battery satisfies 0.05 ≤ CD/(372 × G) × Z₅₀ ≤ 0.1, the cycling performance of the battery can be further improved. The graphitization degree affects the compacted density of the negative electrode active material, and the particle size Z₅₀ also affects the compacted density of the active material. Therefore, when the negative electrode active material satisfies 0.05 ≤ CD/(372 × G) × Z₅₀ ≤ 0.1, the low-temperature lithium precipitation performance of the secondary battery can be further improved, and the cycling performance of the secondary battery can be improved.

Example 3-1 to Example 3-6 differed from Example 2-4 in the pitch addition amount, granulation time, and granulation temperature, with specific details provided in Table 3.

The performance is tested according to the aforementioned methods, with results shown in Table 3.

**Table 3**

| Number | Pitch addition amount (%) | Granulation | | Negative electrode active material | | | | (Z₉₀/Z₁₀) × E - T | Battery performance | |
|---|---|---|---|---|---|---|---|---|---|---|
| | | Time (h) | Temperature (°C) | T (m²/g) | Z₉₀ (µm) | Z₁₀ (µm) | E (µm) | | 1000-cycle capacity retention rate (%) | Whether lithium precipitation occurs at -5°C and 1.6C |
| Example 2-4 | 3 | 2 | 300 | 2.15 | 24.3 | 3.2 | 2.5 | 16.8 | 92.2 | No |
| Example 3-1 | 1 | 3 | 400 | 2.50 | 22.5 | 4.1 | 2.0 | 8.5 | 92.5 | No |
| Example 3-2 | 2 | 5 | 400 | 2.20 | 23.8 | 4.6 | 3.0 | 13.3 | 92.6 | No |
| Example 3-3 | 3 | 4 | 350 | 2.05 | 27.5 | 5.1 | 1.3 | 5.0 | 92.5 | No |
| Example 3-4 | 3 | 3 | 450 | 2.00 | 28.6 | 5.6 | 1.5 | 5.7 | 92.5 | No |
| Example 3-5 | 4 | 3 | 450 | 1.93 | 30.5 | 6.3 | 2.5 | 10.2 | 92.6 | No |
| Example 3-6 | 5 | 3 | 450 | 1.56 | 33.8 | 7.5 | 3.2 | 12.9 | 92.5 | No |

By comparing Example 2-4 with Example 3-1 to Example 3-6, it can be seen that when the negative electrode active material of the battery satisfies 3.5 ≤ (Z₉₀/Z₁₀) × E - T ≤ 20, the cycling performance of the battery can be further improved. The graphitization degree G of the negative electrode active material affects the specific surface area T of the negative electrode active material, thereby influencing the reactive surface area between the electrolyte and the negative electrode active material, and the particle distribution of the negative electrode active material also affects the reactive surface area. Therefore, under the premise of specified graphitization degree G and electrolyte additives, when the negative electrode active material satisfies 3.5 ≤ (Z₉₀/Z₁₀) × E - T ≤ 20, the low-temperature lithium precipitation performance of the secondary battery can be further improved, and the cycling performance of the secondary battery can be improved.

Example 4-1 to Example 4-6 differed from Example 3-5 in the shaping time and classification yield, with specific details provided in Table 4.

The performance is tested according to the aforementioned methods, with results shown in Table 4.

**Table 4**

| Number | Shaping time (h) | Classification yield (%) | Negative electrode active material | | Battery performance | |
|---|---|---|---|---|---|---|
| | | | | | 1000-cycle capacity retention rate (%) | Whether lithium precipitation occurs at -5°C and 1.6C |
| | | | Id/Ig | Sphericity S | | |
| Example 3-5 | 4 | 90 | 0.45 | 0.45 | 92.6 | No |
| Example 4-1 | 2 | 88 | 0.6 | 0.51 | 93 | No |
| Example 4-2 | 3 | 88 | 0.5 | 0.55 | 93.1 | No |
| Example 4-3 | 6 | 95 | 0.35 | 0.48 | 93.2 | No |
| Example 4-4 | 7 | 82 | 0.3 | 0.92 | 93.1 | No |
| Example 4-5 | 6 | 86 | 0.33 | 0.65 | 93.5 | No |
| Example 4-6 | 5 | 86 | 0.38 | 0.6 | 93.4 | No |

By comparing Example 3-5 with Example 4-1 to Example 4-6, it can be seen that when the negative electrode active material satisfies 0.4 ≤ S ≤ 0.95, the cycling performance of the battery can be further improved. The particle morphology of the negative electrode active material affects the electrochemical performance of the secondary battery to some extent, and spherical particles help reduce the reactive surface area of the particles, improving cycling performance and low-temperature lithium precipitation performance. Under the premise of specified graphitization degree G and electrolyte additives, when the sphericity S of the negative electrode active material satisfies 0.4 ≤ S ≤ 0.95, the cycling performance and low-temperature lithium precipitation performance of the battery can be further improved. When the negative electrode active material satisfies 0.2 ≤ Id/Ig ≤ 0.6, the cycling performance of the battery can be improved; under the premise of specified graphitization degree G and electrolyte additives, when the negative electrode active material satisfies 0.2 ≤ Id/Ig ≤ 0.6, the low-temperature lithium precipitation performance of the secondary battery can be further improved, and the cycling performance of the secondary battery can be improved.

Example 5-1 to Example 5-6 differed from Example 4-5 in the pressing conditions of the negative electrode plate, ultimately resulting in different OI values and compacted densities of the negative electrode plate, with specific details provided in Table 5.

The performance is tested according to the aforementioned methods, with results shown in Table 5.

**Table 5**

| Number | Negative electrode plate | | Battery performance | |
|---|---|---|---|---|
| | PD (g/cm³) | OI Value | 1000-cycle capacity retention rate (%) | Whether lithium precipitation occurs at -5°C and 1.6C |
| Example 4-5 | 1.26 | 17 | 93.5 | No |
| Example 5-1 | 1.45 | 18 | 93.8 | No |
| Example 5-2 | 1.55 | 18 | 93.8 | No |
| Example 5-3 | 1.25 | 9 | 93.7 | No |
| Example 5-4 | 1.78 | 14 | 93.8 | No |
| Example 5-5 | 1.55 | 8 | 94.1 | No |
| Example 5-6 | 1.65 | 11 | 94.0 | No |

By comparing Example 4-5 with Example 5-1 to Example 5-6, it can be seen that when the negative electrode plate of the battery satisfies a compacted density of 1.30 g/cm³ ≤ PD ≤ 1.78 g/cm³, the cycling performance of the battery can be improved; when the negative electrode plate of the battery satisfies an OI value equal to or smaller than 18, the cycling performance of the battery can be improved. This is because a compacted density of the electrode plate satisfying 1.30 g/cm³ ≤ PD ≤ 1.78 g/cm³ improves the wetting effect of the electrolyte, facilitates lithium ion intercalation or deintercalation, and provides good electronic conductivity. Additionally, with 6 ≤ OI value of electrode plate ≤ 18, the orientation distribution of the negative electrode active material on the negative electrode current collector is relatively uniform, allowing for intercalation or deintercalation in various directions, thereby improving the cycling performance of the battery.

The embodiments described above are only some embodiments of this application, not all embodiments. The detailed description of these embodiments of this application is not intended to limit the scope of the claimed application but merely represents selected embodiments of this application.

## Claims

1. A secondary battery, comprising a negative electrode plate and an electrolyte; wherein a negative electrode active material in the negative electrode plate has a graphitization degree G, the electrolyte comprises 1,3-propane sultone and fluoroethylene carbonate; and based on a mass of the electrolyte, a mass percentage of the 1,3-propane sultone is X% and a mass percentage of the fluoroethylene carbonate is Y%, wherein X > 0.2 × G + Y, and 1.2 ≤ Y ≤ 4.2.

2. The secondary battery according to claim 1, wherein 1.7 ≤ X ≤ 5.1 or 91.8% < G ≤ 97%.

3. The secondary battery according to claim 1 or 2, wherein the secondary battery satisfies at least one of the following conditions:
(1) $93.5 % \leq G \leq 96 % ;$
(2) $1.8 \leq X \leq 4.1 ;$ or
(3) $1.4 \leq Y \leq 3.5 .$

4. The secondary battery according to any one of claims 1 to 3, wherein the negative electrode active material satisfies at least one of the following conditions:
(4) $0.05 \leq CD / \left(372\times G\right) \times {Z}_{50} \leq 0.1 ,$ wherein a powder compacted density of the negative electrode active material is CD g/cm³, and in a volume-based particle size distribution of the negative electrode active material, a particle size reaching 50% of a cumulative volume from a small particle size side is Z₅₀ µm; and optionally, 0.06 ≤ CD/(372 × G) × Z₅₀ ≤ 0.095; or
(5) $3.5 \leq \left({Z}_{90}/{Z}_{10}\right) \times E - T \leq 20 ,$ wherein a specific surface area of the negative electrode active material is T m²/g; in a volume-based particle size distribution of the negative electrode active material, a particle size reaching 10% of a cumulative volume from a small particle size side is Z₁₀ µm and a particle size reaching 90% of the cumulative volume is Z₉₀ µm; and in a number-based particle size distribution of the negative electrode active material, a particle size reaching 10% of a cumulative number from the small particle size side is E µm; and optionally, 5 ≤ (Z₉₀/Z₁₀) × E - T ≤ 13.

5. The secondary battery according to any one of claims 1 to 4, wherein the negative electrode active material satisfies at least one of the following conditions:
(6) a particle sphericity S of the negative electrode active material satisfies: 0.4 ≤ S ≤ 0.95; and optionally, 0.48 ≤ S ≤ 0.7; or
(7) an intensity ratio Id/Ig of D peak to G peak in a Raman spectrum of the negative electrode active material satisfies: 0.2 ≤ Id/Ig ≤ 0.6, wherein Id represents a characteristic peak intensity of the Raman spectrum at 1300 cm⁻¹ to 1400 cm⁻¹, and Ig represents a characteristic peak intensity of the Raman spectrum at 1525 cm⁻¹ to 1625 cm⁻¹; and preferably, 0.2 ≤ Id/Ig ≤ 0.4.

6. The secondary battery according to any one of claims 1 to 5, wherein the negative electrode active material satisfies at least one of the following conditions:
(8) a powder compacted density of the negative electrode active material is CD g/cm³, and 1.7 ≤ CD ≤ 2.0; or
(9) in a volume-based particle size distribution of the negative electrode active material, a particle size reaching 50% of a cumulative volume from a small particle size side is Z₅₀ µm, and 7 ≤ Z₅₀ ≤ 15.

7. The secondary battery according to any one of claims 1 to 6, wherein the negative electrode active material satisfies at least one of the following conditions:
(10) in a number-based particle size distribution of the negative electrode active material, a particle size reaching 10% of a cumulative number from a small particle size side is E µm, and 1 ≤ E ≤ 5;
(11) in a volume-based particle size distribution of the negative electrode active material, a particle size reaching 90% of a cumulative volume from a small particle size side is Z₉₀ µm, and 20 ≤ Z₉₀ ≤ 35; or
(12) in a volume-based particle size distribution of the negative electrode active material, a particle size reaching 10% of a cumulative volume from a small particle size side is Z₁₀ µm, and 3 ≤ Z₁₀ ≤ 8.

8. The secondary battery according to any one of claims 1 to 7, wherein the negative electrode plate satisfies at least one of the following conditions:
(13) a compacted density of the negative electrode plate satisfies: 1.30 g/cm³ ≤ PD ≤ 1.78 g/cm³; or
(14) an OI value of the negative electrode plate satisfies: 6 ≤ OI value ≤ 18.

9. The secondary battery according to any one of claims 1 to 8, wherein the negative electrode active material comprises at least one of natural graphite or artificial graphite.

10. An electrical device, comprising the secondary battery according to any one of claims 1 to 9.
